# EUROPEAN PATENT SPECIFICATION

(11) **EP 0 770 998 B1**
(45) Date of publication and mention of the grant of the patent: **24.03.2004**
(21) Application number: 96307598.1
(22) Date of filing: 18.10.1996
(51) Int. Cl.: G11B 19/20, F16D 1/06

(54) **Hard disc drive with a compound bearing assembly**
Festplattenantrieb mit zusammengesetzter Lagereinheit
Entraînement de disque dur à palier composé

(30) Priority: 20.10.1995 JP 29739295; 20.10.1995 JP 29739395
(43) Date of publication of application: 02.05.1997
(73) Proprietor: MINEBEA CO.,LTD., Kitasaku-gun Nagano-ken (JP)
(72) Inventor: Obara, Rikuro, c/o Minebea K. K., Kitasaku-gun, Nagano-ken (JP)
(74) Representative: Warren, Keith Stanley

(56) References cited:
- EP-A- 0 613 134
- DE-A- 3 540 363
- FR-A- 2 565 017
- US-A- 5 341 569

## Description

This invention relates to improvements in the bearing part of the motor of a hard disc drive.

A hard disc drive may use a spindle motor. A spindle motor comprises a motor shaft, a rotor, a base and a yoke holder. The motor shaft is supported in a bearing assembly, which is provided in a bearing sleeve and includes an inner and an outer race ring and balls.

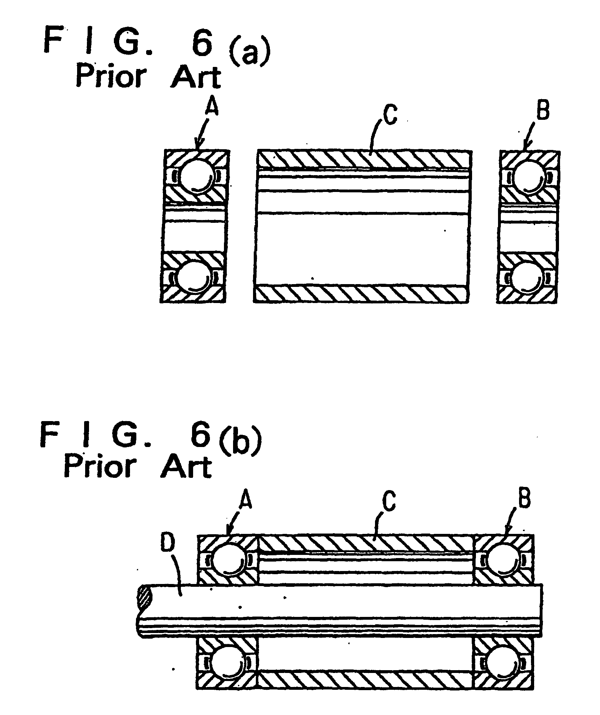

A prior art bearing assembly, as shown in Figs. 6(a) and 6(b), comprises two ball bearing units A and B and a separable sleeve-like spacer C. These components are produced separately and supplied to the user, e.g. a hard disc drive manufacturer, for assembling on a motor shaft D.

As shown, with the conventional bearing assembly of the motor in the hard disc drive, it is necessary for the hard disc drive manufacturer to assemble the two ball bearing units on the motor shaft separated by the spacer. This poses the following problems.
(a) The motor shaft has to be prepared with its outer diameter sized to match the inner race rings of the ball bearing units.
(b) The spacer is a separate component from the two ball bearing units. To be able to fit the spacer between the ball bearing units the end faces of the spacer must be highly accurately finished, to be both flat and parallel.
(c) The opposite end surfaces of the spacer should be in uniform contact with the corresponding end surfaces of the outer race rings of the ball bearing units. This requires cumbersome machining and assembling work.

Unless all the above requirements are fully met, vibrations of the motor shaft and the disc may result. Therefore, it is impossible to obtain a hard disc drive having excellent rotational performance, as vibrations of the motor shaft or the disc may result.

US-A-5,341,569 discloses a preload-adjustable bearing including a stepped shaft having a first portion with a larger diameter than a second portion. An inner race ring is fitted on the smaller diameter portion. A sleeve-like outer race ring surrounds the stepped shaft and the inner race ring has a pair of outer raceway grooves formed directly in its inner periphery. A plurality of first balls are received in an inner raceway groove of the larger diameter portion and retained in one of the outer raceway grooves formed in the outer race ring, and a plurality of second balls are received in an inner raceway groove formed in the inner race ring and retained in the other outer raceway groove. The stepped shaft may project from a base of a hard disc drive with a base-end stem portion of the larger diameter portion being secured to the base, the hard disc drive including a motor having a rotor with a central hub fitted on and secured to the preload-adjustable bearing.

An object of the invention is to provide a hard disc drive having improved performance, by addressing the problems discussed above. An advantage of the invention is that the manufacturer can use a bearing assembly in which the components thereof are already assembled with its motor.

According to the present invention there is provided a hard disc drive comprising a compound bearing assembly including
a stepped shaft having a larger diameter portion and a smaller diameter portion,
an inner race ring fitted on said smaller diameter portion,
a sleeve-like outer race ring surrounding said larger diameter portion of the stepped shaft,
a distinct sleeve-like outer race ring surrounding said Smaller diameter portion of the stepped shaft and abutting one end of said outer race ring,
an outer raceway groove directly formed in the inner periphery of the outer race ring and in the inner periphery of the distinct outer race ring,
a plurality of first balls received in an inner raceway groove directly formed in said larger diameter portion and retained in the outer raceway groove of the outer race ring, and
a plurality of second balls received in an inner raceway groove formed in the inner race ring and retained in the outer raceway groove of the distinct outer race ring,
said stepped shaft projecting from a base of the hard disc drive with a base-end stem portion of said larger diameter portion secured to the base, said hard disc drive comprising a motor including a rotor having a central hub fitted on and secured to the compound bearing assembly,
said inner race ring being slidably fitted on said smaller diameter portion and adhesive secures the inner race ring to the smaller diameter portion in a preloaded state,
characterised in that the axial lengths of said sleeve-like outer race ring and said distinct sleeve-like outer race ring are different.

The inner race ring, its associated distinct outer race ring and the plurality of second balls therebetween may constitute a ball bearing unit.

Embodiments of the present invention will now be described, by way of example, with reference to the accompanying drawings in which:
Fig. 1 is a perspective view showing a hard disc drive,
Fig. 2 is a sectional view showing a first embodiment of an outer rotor type motor in the hard disc drive in accordance with the present invention,
Fig. 3 is a sectional view showing a second embodiment of the outer rotor type motor in the hard disc drive in accordance with the present invention,
Fig. 4 is a sectional view showing a first embodiment of an inner rotor type motor in the hard disc drive in accordance with the present invention;
Fig. 5 is a sectional view showing a second embodiment of an inner rotor type motor in the hard disc drive in accordance with the present invention; and
Figs. 6(a) and 6(b) are sectional views showing a prior art bearing assembly, Fig. 6(a) showing two ball bearing units and a spacer before assembling, Fig. 6(b) showing the ball bearing units and spacer assembled on a motor shaft.

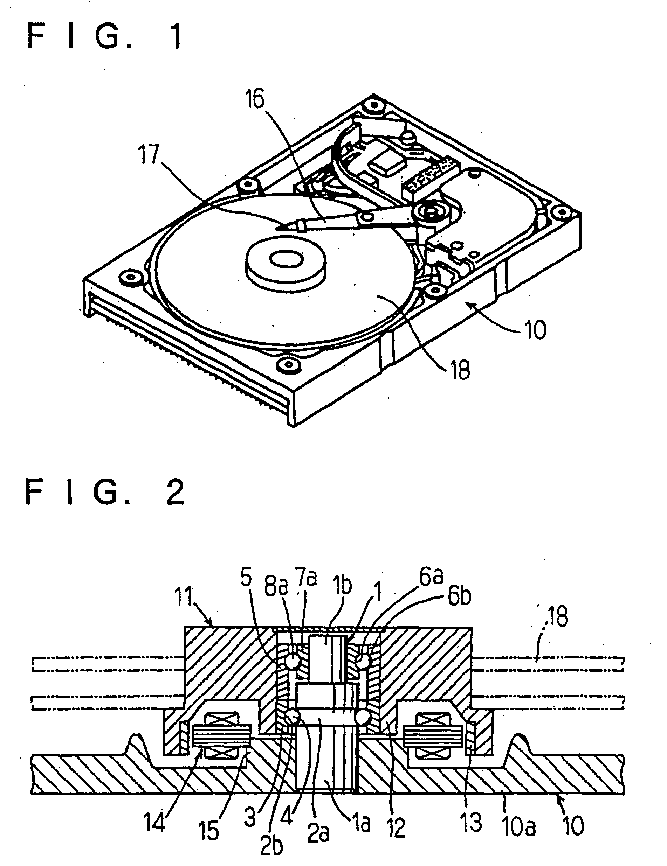

Referring to Fig. 2, a stepped shaft 1 has a first portion 1a with a larger diameter than a second portion 1b. The larger diameter portion 1a has an inner raceway groove 2a directly formed in its outer periphery.

An outer race ring 3 is assembled on the larger diameter portion 1a of the stepped shaft 1 with a plurality of balls 4 provided between an outer raceway groove 2b formed in its inner periphery and the inner raceway groove 2a formed in the larger diameter portion 1a.

A sleeve-like outer race ring 5, is assembled on the small-diameter portion 1b of the stepped shaft 1 with a plurality of balls 8a provided between an outer raceway groove 6b directly formed in the inner periphery of its upper end portion and an inner raceway groove 6a formed in the outer periphery of an inner race ring 7a fitted on the small-diameter portion 1b.

The inner race ring 7a which is fitted on the smaller diameter portion 1a of the stepped shaft 1, has an outer diameter equal to that of the larger diameter portion 1a of the shaft, so that the balls 4 and 8a may have the same diameter.

In constructing the bearing assembly, the inner race ring 7a is initially slidably fitted on the small-diameter portion 1b of the stepped shaft 1. Then, an adequate pre-load is applied to the upper end surface of the inner race ring 7a, and in this state the inner race ring 7a is secured by means of an adhesive to the smaller diameter portion 1b of the shaft 1. In this way, the outer race ring 3, the sleeve-like outer race ring 5 and the inner race ring 7a are assembled on the stepped shaft 1.

The bearing assembly which has been assembled in the above way, has the stem (or lower end) of the larger diameter portion 1a of the stepped shaft 1 secured to a base 10a of a housing 10 of the hard disc drive such that the stepped shaft 1 extends upright from the base 10a. Then, the outer race rings 3 and 5 of the bearing assembly are fitted on and secured to a hub 12 depending from the centre of the lower surface of a rotor 11 of the motor.

A magnet 13, a stator yoke 14 with an energizing coil wound thereon, and a yoke holder 15, a swing arm 16 with a magnetic head 17 provided at the end, and a magnetic disc 18 are also illustrated in Figs. 1 and 2.

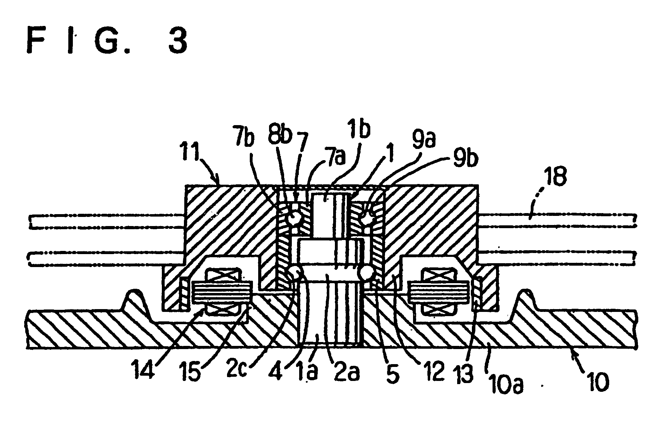

Fig. 3 shows a second embodiment of a disc drive using a different bearing assembly.

Again, the inner raceway groove 2a is directly formed in the outer periphery of the larger diameter portion 1a of the stepped shaft 1 of the bearing assembly.

In this embodiment, a sleeve-like outer race ring 5 which surrounds the large-diameter portion 1a of the stepped shaft 1, has an outer raceway groove 2c directly formed in the inner periphery of its lower end portion, with the balls 4 provided between the outer raceway groove 2c and the inner raceway groove 2a of the larger diameter portion 1a.

A conventional ball bearing unit 7 which includes an inner and an outer race ring 7a and 7b and balls 8b provided therebetween, is provided on the small-diameter portion 1b of the stepped shaft 1 with the inner race ring 7a fitted on and secured to the small-diameter portion 1b.

The inner race ring 7a of the ball bearing unit 7 has an equal outer diameter to that of the larger diameter portion 1a of the stepped shaft 1, and the outer race ring 7b has equal outer and inner diameters to those of the sleeve-like outer race ring 5, so that the balls 4 and 8b are equal in diameter.

In constructing the assembly, the inner race ring 7a of the ball bearing unit 7 is initially slidably fitted on the small diameter portion 1b of the stepped shaft 1, then an adequate pre-load is applied to the upper end surface of the inner race ring 7a, and in this state the inner race ring 7a is secured by means of an adhesive to the small diameter portion 1b. In this way, the outer race ring, the sleeve-like outer race ring 5 and the inner race ring are assembled to the stepped shaft 1.

While in the above first and second embodiments the balls 4 and 8b have the same diameter, it is possible to use balls having different diameters on the sides of the larger and smal ler diameter portions 1a and 1b respectively.

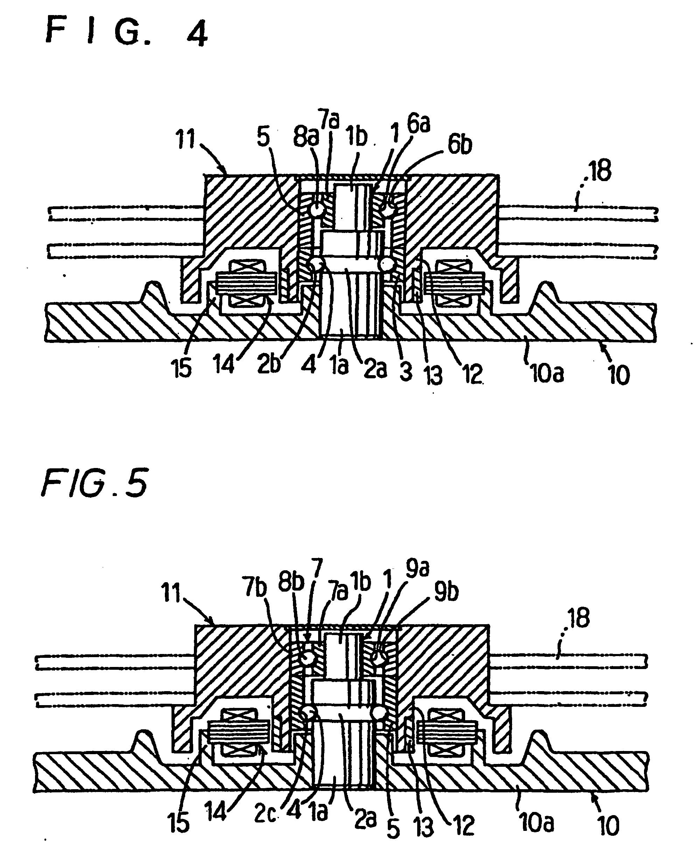

While the above embodiments are concerned with hard disc drives using the outer rotor type motors, the invention is also applicable to inner rotor type motors as shown in Figs. 4 and 5, in which the magnet 13 is provided on the outer side of the hub 12 of the rotor 11.

With the motor of the hard disc drive in accordance with the invention, in which the bearing assembly has the construction as described in the foregoing, the following advantageous functions and effects are obtainable.
(1) Since the inner race ring, the outer race ring, the sleeve-like outer race ring and the balls of the compound bearing assembly are assembled on the motor shaft by the bearing manufacturer, it is not necessary for the hard disc drive manufacturer to assemble these components. Thus the rotor of the motor can be readily mounted on the bearing assembly by fitting and securing the hub of the motor with respect to the sleeve-like outer race ring of the bearing assembly, by the disc drive manufacturer.
(2) Since the larger diameter portion of the stepped shaft in the bearing assembly in accordance with the invention has the inner raceway groove directly formed in its outer periphery, the conventional inner race ring is unnecessary, and correspondingly the shaft is partly increased in diameter to provide the stepped shaft, thus increasing rigidity.
(3) Since the stepped shaft has the larger diameter portion and has increased rigidity, the resonance point of the shaft can be raised compared to those of the other components to prevent resonance with the other components and thus improve the performance and reliability of the motor. It is thus possible to provide a hard disc drive which is less subject to surface vibrations.
(4) The bearing assembly needs only a single conventional ball bearing unit, and hence only a single inner race ring, and thus comprise a reduced number of components.
(5) Since the larger diameter portion of the stepped shaft has the inner raceway groove directly formed in its outer periphery, no inner race ring is needed for the larger diameter portion, permitting a corresponding reduction in the outer diameter of the outer race ring. It is thus possible to provide a more compact hard disc drive, as desired.

## Claims

1. A hard disc drive comprising a compound bearing assembly including
a stepped shaft (1) having a larger diameter portion (1a) and a smaller diameter portion (1b),
an inner race ring (7a) fitted on said smaller diameter portion (1b),
a sleeve-like outer race ring (3,5) surrounding said larger diameter portion (1a) of the stepped shaft (1),
a distinct sleeve-like outer race ring (5,7b) surrounding said smaller diameter portion (1b) of the stepped shaft (1) and abutting one end of said outer race ring (3,5),
an outer raceway groove (2b,2c,6b,9b) directly formed in the inner periphery of the outer race ring (3,5) and in the inner periphery of the distinct outer race ring (5,7b),
a plurality of first balls (4) received in an inner raceway groove (2a) directly formed in said larger diameter portion (1a) and retained in the outer raceway groove (2b,2c) of the outer race ring (3,5), and
a plurality of second balls (8a,8b) received in an inner raceway groove (6a,9a) formed in the inner race ring (7a) and retained in the outer raceway groove (6b,9b) of the distinct outer race ring (5,7b),
said stepped shaft (1) projecting from a base (10a) of the hard disc drive with a base-end stem portion of said larger diameter portion (1a) secured to the base (10a), said hard disc drive comprising a motor including a rotor (11) having a central hub (12) fitted on and secured to the compound bearing assembly,
said inner race ring (7a) being slidably fitted on said smaller diameter portion (1b) and adhesive secures the inner race ring (7a) to the smaller diameter portion in a preloaded state;
**characterised in that** the axial lengths of said sleeve-like outer ring (3, 5) and said distinct sleeve-like outer race ring (5, 7b) are different.

2. A hard disc drive as claimed in claim 1, wherein the distinct sleeve-like outer race ring (7b) surrounds said smaller diameter portion (1b) of the stepped shaft (1) only, and the axial length of said sleeve-like outer race ring (5) is longer than the axial length of said distinct sleeve-like outer race ring (7b).

3. A hard disc drive as claimed in claim 1, wherein the sleeve-like outer race ring (3) surrounds said larger diameter portion (1a) of the stepped shaft (1) only, the distinct sleeve-like outer race ring (5) surrounding said smaller diameter portion (1b) and said larger diameter portion (1a) of the stepped shaft (1), and the axial length of said distinct sleeve-like outer race ring (5) being longer than the axial length of said sleeve-like outer race ring (3).

4. A hard disc drive as claimed in any preceding claim, wherein said inner raceway grooves (2a,6a,9a) are of the same in outer diameter, and said outer raceway grooves (2b,2c,6b,9b) are of the same inner diameter.

## Patentansprüche

1. Festplattenlaufwerk, der eine zusammengesetzte Lageranordnung hat mit
einer gestuften Welle (1) mit einem Teil größeren Durchmessers (1a) und einem Teil kleineren Durchmessers (1b),
einem inneren Laufring (7a), der an dem genannten Teil kleineren Durchmessers (1b) angebracht ist,
einem buchsenartigen äußeren Laufring (3, 5), der den genannten Teil größeren Durchmessers (1a) der gestuften Welle (1) umgibt,
einem separaten buchsenartigen äußeren Laufring (5, 7b), der den genannten Teil kleineren Durchmessers (1b) der gestuften Welle (1) umgibt und an ein Ende des genannten äußeren Laufrings (3, 5) anstößt,
einer äußeren Laufrille (2b, 2c, 6b, 9b), die direkt in der inneren Außenfläche des äußeren Laufrings (3, 5) und in der inneren Außenfläche des separaten äußeren Laufrings (5, 7b) gebildet ist,
einer Mehrzahl erster Kugeln (4), die in einer direkt im Teil größeren Durchmessers (1a) gebildeten inneren Laufrille (2a) aufgenommen sind und in der äußeren Laufrille (2b, 2c) des äußeren Laufrings (3, 5) gehalten werden, und
einer Mehrzahl zweiter Kugeln (8a, 8b), die in einer im inneren Laufring (7a) gebildeten inneren Laufrille (6a, 9a) aufgenommen sind und in der äußeren Laufrille (6b, 9b) des separaten äußeren Laufrings (5, 7b) gehalten werden,
wobei die gestufte Welle (1) von einer Basis (10a) des Festplattenlaufwerks vorspringt, wobei ein basisseitiger Schaftteil des genannten Teils größeren Durchmessers (1a) an der Basis (10a) befestigt ist, wobei das genannte Festplattenlaufwerk einen Motor hat, der einen Läufer (11) mit einer an der zusammengesetzten Lageranordnung angebrachten und befestigten zentralen Nabe (12) hat,
wobei der genannte innere Laufring (7a) gleitfähig an dem genannten Teil kleineren Durchmessers (1b) angebracht ist und der innere Laufring (7a) mit Klebstoff in einem vorgespannten Zustand an dem Teil kleineren Durchmessers befestigt ist;
**dadurch gekennzeichnet, dass** die axiale Länge des genannten buchsenartigen äußeren Rings (3, 5) und des genannten separaten buchsenartigen äußeren Laufrings (5, 7b) verschieden sind.

2. Festplattenlaufwerk nach Anspruch 1, bei dem der separate buchsenartige äußere Laufring (7b) nur den genannten Teil kleineren Durchmessers (1b) der gestuften Welle (1) umgibt und die axiale Länge des genannten buchsenartigen äußeren Laufrings (5) länger als die axiale Länge des genannten separaten buchsenartigen äußeren Laufrings (7b) ist.

3. Festplattenlaufwerk nach Anspruch 1, bei dem der buchsenartige äußere Laufring (3) nur den genannten Teil größeren Durchmessers (1a) der gestuften Welle (1) umgibt, wobei der separate buchsenartige äußere Laufring (5) den genannten Teil kleineren Durchmessers (1b) und den genannten Teil größeren Durchmessers (1a) der gestuften Welle (1) umgibt und die axiale Länge des genannten separaten buchsenartigen äußeren Laufrings (5) länger als die axiale Länge des genannten buchsenartigen äußeren Laufrings (3) ist.

4. Festplattenlaufwerk nach einem der vorhergehenden Ansprüche, bei dem die genannten inneren Laufrillen (2a, 6a, 9a) den gleichen Außendurchmesser haben und die genannten äußeren Laufrillen (2b, 2c, 6b, 9b) den gleichen Innendurchmesser haben.

## Revendications

1. Unité de disque dur comprenant un ensemble de roulement composé comprenant :
un arbre à épaulement (1) ayant une partie de plus grand diamètre (1a) et une partie de plus petit diamètre (1b),
une bague de roulement intérieure (7a) montée sur ladite partie de plus petit diamètre (1b),
une bague de roulement extérieure en forme de manchon (3, 5) entourant ladite partie de plus grand diamètre (1a) dudit arbre à épaulement (1),
une bague de roulement extérieure distincte en forme de manchon (5,7b) entourant ladite partie de plus petit diamètre (1b) de l'arbre à épaulement (1) et aboutant une extrémité de ladite bague de roulement extérieure (3,5),
une gorge de roulement extérieure (2b, 2c, 6b, 9b) formée directement dans la périphérie intérieure de la bague de roulement extérieure (3,5) et dans la périphérie intérieure de la bague de roulement extérieure distincte (5, 7b),
une pluralité de premières billes (4) reçues dans une gorge de roulement intérieure (2a) formée directement dans ladite partie de plus grand diamètre (1a) et retenue dans la gorge de roulement extérieure (2b, 2c) de la bague de roulement extérieure (3,5), et
une pluralité de secondes billes (8a,8b) reçues dans une gorge de roulement intérieure (6a, 9a) formée dans la bague de roulement intérieure (7a) et retenues dans la gorge de roulement extérieure (6b, 9b) de la bague de roulement extérieure distincte (5, 7b),
ledit arbre à épaulement (1) dépassant d'une base (10a) de l'unité de disque dur, une partie tige d'extrémité de base de ladite partie de plus grand diamètre (1a) étant fixée à la base (10a), ladite unité de disque dur comportant un moteur comprenant un rotor (11) ayant un moyeu central (12) monté sur et fixé à l'ensemble de roulement composé,
ladite bague de roulement intérieure (7a) étant montée de manière coulissante sur ladite partie de plus petit diamètre (1b) et un adhésif fixant la bague de roulement intérieure (7a) à la partie de plus petit diamètre dans un état de précharge ;
**caractérisée en ce que** les longueurs axiales de ladite bague extérieure en forme de manchon (3, 5) et ladite bague de roulement extérieure distincte en forme de manchon (5, 7b) sont différentes.

2. Unité de disque dur selon la revendication 1, dans laquelle ladite bague de roulement extérieure distincte en forme de manchon (7b) entoure seulement ladite partie de plus petit diamètre (1b) de l'arbre à épaulement, et la longueur axiale de ladite bague de roulement extérieure en forme de manchon (5) est plus longue que la longueur axiale de ladite bague de roulement extérieure distincte en forme de manchon (7b).

3. Unité de disque dur selon la revendication 1, dans laquelle la bague de roulement extérieure en forme de manchon (3) entoure seulement ladite partie de plus grand diamètre (1a) dudit arbre à épaulement (1), la bague de roulement extérieure distincte en forme de manchon (5) entourant ladite partie de plus petit diamètre (1b) et ladite partie de plus grand diamètre (1a) de l'arbre à épaulement (1), et la longueur axiale de ladite bague de roulement extérieure distincte en forme de manchon (5) étant plus longue que la longueur axiale de ladite bague de roulement extérieure en forme de manchon (3).

4. Unité de disque dur selon l'une quelconque des revendications précédentes, dans laquelle lesdites gorges de roulement intérieures (2a, 6a, 9a) sont de même diamètre extérieur, et lesdites gorges de roulement extérieures (2b, 2c, 6b, 9b) sont de même diamètre intérieur.
